# EUROPEAN PATENT APPLICATION

(11) **EP 4 421 975 A1**
(43) Date of publication of application: **28.08.2024**
(21) Application number: 22946314.6
(22) Date of filing: 17.06.2022
(51) Int. Cl.: H01M 50/586, H01M 50/593, H01M 10/0525, H01M 10/052

(54) **BATTERY CELL, BATTERY, AND ELECTRIC DEVICE**

(71) Applicant: Contemporary Amperex Technology Co., Limited, Ningde, Fujian 352100 (CN)
(72) Inventor: LEI, Yuyong, Ningde, Fujian 352100 (CN); GUO, Zhijun, Ningde, Fujian 352100 (CN); WANG, Peng, Ningde, Fujian 352100 (CN); YANG, Rui, Ningde, Fujian 352100 (CN)
(74) Representative: Jacob, Reuben Ellis
(86) International application number: PCT/CN2022/099581
(87) International publication number: WO 2023/240633

(57) **Abstract**

Provided in the embodiments of the present application are a battery cell, a battery, and an electric device. The battery cell comprises a housing, an electrode assembly, and a separation member. The housing is provided with an electrode lead-out member. The electrode assembly is accommodated in the housing. The electrode assembly comprises a main body portion and a tab led out from an end surface of the main body portion. At least a portion of the separation member is disposed between the electrode lead-out member and the end surface of the main body portion. The separation member is provided with a channel, and the tab passes through the channel to be electrically connected to the electrode lead-out member. The separation member enables at least a portion of the tab passing through the channel to be insulated and isolated from the end surface of the main body portion, such that when the battery cell is subjected to an external impact, the risk that the tab is inserted into the main body portion is reduced, thereby reducing short circuit risks, and improving the safety.

## Description

### TECHNICAL FIELD

This application relates to the field of battery technologies, and more specifically, to a battery cell, a battery, and an electric device.

### BACKGROUND

Battery cells are widely used in electronic devices such as mobile phones, notebook computers, electric bicycles, electric cars, electric airplanes, electric ships, electric toy cars, electric toy ships, electric toy airplanes, and electric tools.

How safety of battery cells is improved is a research direction in battery technologies.

### SUMMARY

This application provides a battery cell, a battery, and an electric device with improved safety.

According to a first aspect, an embodiment of this application provides a battery cell including a housing, an electrode assembly, and an isolation member. The housing is provided with an electrode lead-out member. The electrode assembly is accommodated in the housing, where the electrode assembly includes a body portion and a tab led out of an end face of the body portion. At least a portion of the isolation member is disposed between the electrode lead-out member and the end face of the body portion, where the isolation member is provided with a channel, and the tab passes through the channel and is electrically connected to the electrode lead-out member.

In the foregoing technical solution, the isolation member can insulate and isolate at least a portion of the tab passing through the channel from the end face of the body portion, thereby reducing the risk of the tab being inserted into the body portion when the battery cell is subjected to an external impact, reducing short circuit hazards, and improving safety.

In some implementations, the tab includes a plurality of tab layers, a portion of the plurality of tab layers being stacked in the channel. Size of the channel in its width direction is W₁, total thickness of the plurality of tab layers is T₁, and W₁ and T₁ satisfy 0.5 mm ≤ W₁ - T₁ ≤ 4 mm.

With the value of W₁ - T₁ limited to 0.5 mm-4 mm, the plurality of tab layers are in an uncompressed state in the channel, which can not only restrain the plurality of tab layers to some extent, reducing deformation of the tab layers, but also reduce frictional forces between the tab layers and walls of the channel, reducing the risk of frictional wear of the tab layers.

In some implementations, W₁ and T₁ satisfy 1 mm ≤ W₁ - T₁ ≤ 3 mm.

In some implementations, an axial direction of the channel is perpendicular to the end face of the body portion, so as to reduce difficulty of the tab passing through the channel, decreasing the maximum angle of bending of the tab layers.

In some implementations, the tab includes a first tab portion, a second tab portion, and a third tab portion. The first tab portion is connected to the body portion, at least a portion of the first tab portion being located between the isolation member and the body portion. The second tab portion is connected to an end of the first tab portion facing away from the body portion, the second tab portion being accommodated in the channel. The third tab portion is connected to an end of the second tab portion facing away from the first tab portion and configured to connect the electrode lead-out member. At least a portion of the isolation member is located between the third tab portion and the body portion, so as to insulate and isolate the third tab portion from the end face of the body portion, thereby reducing the risk of the third tab portion being inserted into the body portion, improving the safety.

In some implementations, the third tab portion includes a first segment, a second segment, and a first bending segment. The first segment is connected to the second tab portion, at least a portion of the isolation member being located between the first segment and the body portion. The second segment is located on a side of the first segment facing away from the body portion and connected to the electrode lead-out member. The first bending segment is configured to connect the first segment and the second segment.

The third tab portion is bent into two layers, so as to reduce space occupied by the third tab portion in a direction perpendicular to the end face, increasing energy density of the battery cell. The isolation member can insulate and isolate the first segment from the end face of the body portion, thereby reducing the risk of the first segment being inserted into the body portion, improving the safety.

In some implementations, the second segment is parallel to the end face of the body portion, so as to reduce the space occupied by the third tab portion in the direction perpendicular to the end face, increasing the energy density of the battery cell.

In some embodiments, the third tab portion is provided with a first fusion region, the first fusion region is located only on the second segment, and at least a portion of the first fusion region is connected to the electrode lead-out member.

During bending of the third tab portion, the first fusion region is located only on the second segment, such that the first fusion region avoids the bending position of the third tab portion, reducing the risk of cracking of the first fusion region.

In some embodiments, the battery cell further includes an adapter. The adapter includes a tab connecting portion, an electrode connecting portion, and a second bending segment. The tab connecting portion is connected to the third tab portion. The electrode connecting portion is located on a side of the tab connecting portion facing away from the body portion and connected to the electrode lead-out member. The second bending segment is configured to connect the tab connecting portion and the electrode connecting portion. Providing the adapter to connect the third tab portion and the electrode lead-out member can reduce the requirement for the size of the third tab portion and reduce assembly difficulty.

In some implementations, the tab connecting portion, the electrode connecting portion, and the third tab portion are all parallel to the end face of the body portion, so as to reduce the space occupied by the adapter and the third tab portion in the direction perpendicular to the end face, increasing the energy density of the battery cell.

In some implementations, the second bending segment is provided with a weak structure. The weak structure is provided to guide the adapter to be bent in a designated region.

In some implementations, the adapter is provided with a second fusion region and a third fusion region, the second fusion region is disposed only on the tab connecting portion and configured to be connected to the third tab portion, and the third fusion region is disposed only on the electrode connecting portion and configured to be connected to the electrode lead-out member.

During bending of the adapter, the second fusion region is disposed only on the tab connecting portion and the third fusion region is disposed only on the electrode connecting portion, such that the second fusion region and the third fusion region avoid the bending position of the adapter, reducing the risk of cracking of the second fusion region and the third fusion region.

In some implementations, the isolation member includes an isolation plate, the isolation plate is provided with the channel, and at least a portion of the isolation plate is located between the third tab portion and the body portion. The isolation plate can insulate and isolate the third tab portion from the end face of the body portion, thereby reducing the risk of the third tab portion being inserted into the body portion, improving the safety.

In some implementations, the isolation member further includes a connecting plate, the connecting plate surrounds an outer side of the isolation plate, and the connecting plate protrudes out of a side of the isolation plate facing away from the body portion to define an accommodating recess together with the isolation plate. At least a portion of the third tab portion is accommodated in the accommodating recess. The connecting plate can improve overall strength of the isolation member and can also surround the third tab portion to insulate and isolate the third tab portion from at least a portion of the housing, improving the safety.

In some implementations, the battery cell further includes an insulating member accommodated in the housing and connected to the housing. At least a portion of the connecting plate is located between the insulating member and the end face of the body portion. The insulating member and the end face can limit the connecting plate from two sides, so as to reduce a swaying range of the isolation member when the battery cell is subjected to an external impact.

In some implementations, in a first direction perpendicular to the end face, at least a portion of the connecting plate is clamped between the insulating member and the end face of the body portion. The insulating member and the end face of the body portion clamp at least a portion of the connecting plate from two sides, so as to limit movement of the connecting plate in the first direction, which in turn reduces the swaying range of the isolation member in the first direction when the battery cell is subjected to an external impact, improving the safety.

In some implementations, at least a portion of the insulating member is accommodated in the accommodating recess. The portion of the insulating member accommodated in the accommodating recess can limit the isolation member, thereby limiting movement of the isolation member in a direction perpendicular to the first direction.

In some implementations, an inner surface of the connecting plate is provided with a stepped surface, and the portion of the insulating member accommodated in the accommodating recess abuts against the stepped surface. The insulating member abuts against the stepped surface to limit movement of the isolation member in the first direction.

In some implementations, the inner surface of the connecting plate further includes a limiting surface connected to the stepped surface, and the limiting surface surrounds an outer side of the insulating member and is fitted to the insulating member. The portion of the insulating member accommodated in the accommodating recess is fitted to the limiting surface to limit movement of the limiting surface.

In some implementations, the isolation member is an integrally formed structure. Providing the isolation member as the integrally formed structure allows the isolation member to have high overall strength and eliminate the assembly process of the isolation member.

In some implementations, the isolation plate includes a first isolation plate and a second isolation plate that are spaced apart, the channel being formed between the first isolation plate and the second isolation plate. The connecting plate includes a first connecting plate and a second connecting plate, where the first connecting plate and the first isolation plate are integrally formed, the second connecting plate and the second isolation plate are integrally formed, and the first connecting plate and the second connecting plate are independently formed and connected to each other.

In the foregoing technical solution, the isolation member being separately formed allows for more flexible assembly of the isolation member and the electrode assembly.

In some implementations, the first connecting plate is snap-fitted with the second connecting plate. The snap-fitting can simplify the assembly process of the first connecting plate and the second connecting plate.

In some implementations, the first connecting plate includes two first snap-fit portions, the two first snap-fit portions being disposed on two opposite ends of the first isolation plate respectively. The second connecting plate includes two second snap-fit portions, the two second snap-fit portions being disposed on two opposite ends of the second isolation plate respectively. The first snap-fit portions are snap-fitted with the second snap-fit portions. Fitting of the two first snap-fit portions and the two second snap-fit portions can achieve fixing of the first connecting plate and the second connecting plate, and further improve stability and reliability of the connection between the first connecting plate and the second connecting plate.

In some implementations, at least one of the first snap-fit portions is provided with a protrusion and at least one of the second snap-fit portions is provided with a snap-fit hole, at least a portion of the protrusion being accommodated in the snap-fit hole to snap-fit the first snap-fit portion with the second snap-fit portion. The first snap-fit portion is snap-fitted with the second snap-fit portion through fitting of the protrusion and the snap-fit hole.

In some implementations, the isolation plate includes a first isolation plate and a second isolation plate that are spaced apart, the channel being formed between the first isolation plate and the second isolation plate. One portion of the first tab portion is located between the first isolation plate and the body portion, and the other portion of the first tab portion is located between the second isolation plate and the body portion. The first isolation plate and the second isolation plate can limit the first tab portion, so as to reduce swaying and deformation of the first tab portion when the battery cell is subjected to an external impact.

In some implementations, the first isolation plate includes a first inclined surface facing the body portion. In a first direction perpendicular to the end face, minimum distance between an end of the first inclined surface closer to the channel and the end face of the body portion is greater than minimum distance between an end of the first inclined surface farther away from the channel and the end face of the body portion. In the first direction, one portion of the first tab portion is located between the first inclined surface and the end face of the body portion.

Providing the first inclined surface can reduce a gap between the first isolation plate and the first tab portion, which in turn allows the first isolation plate to limit and shape the first tab portion and helps maintain morphology of the first tab portion.

In some implementations, an included angle between the first inclined surface and the end face is α, size of the first tab portion in the first direction is h₀, and size of the first tab portion in a second direction is W₀, the second direction being a stacking direction of a plurality of tab layers of the first tab portion and perpendicular to the first direction, α, h₀, and W₀ satisfy tanα ≥ 2h₀/W₀.

In the foregoing technical solution, pressure between the first inclined surface and the first tab portion can be reduced, reducing the risk of cracking of the tab layers of the first tab portion.

In some implementations, α, h₀, and W₀ satisfy tanα = 2h₀/W₀. The first inclined surface is substantially parallel to a tab inclined surface of the first tab portion, which in turn reduces a gap between the first inclined surface and the first tab portion and allows the first inclined surface to effectively shape the first tab portion.

In some implementations, the first inclined surface abuts against the first tab portion. The first inclined surface abutting against the first tab portion can shape the first tab portion and maintain the morphology of the first tab portion.

In some implementations, the second isolation plate includes a second inclined surface facing the body portion. In the first direction, minimum distance between an end of the second inclined surface closer to the channel and the end face of the body portion is greater than minimum distance between an end of the second inclined surface farther away from the channel and the end face of the body portion. In the first direction, the other portion of the first tab portion is located between the second inclined surface and the end face of the body portion.

Providing the second inclined surface can reduce a gap between the second isolation plate and the first tab portion, which in turn allows the second isolation plate to shape the first tab portion and helps maintain the morphology of the first tab portion.

In some implementations, an included angle between the first inclined surface and the end face is equal to an included angle between the second inclined surface and the end face, so as to reduce difference in bending angles of tab layers on the two outermost sides of the first tab portion, helping improve the morphology of the first tab portion.

In some implementations, minimum thickness of the first isolation plate is d1, where d1 ≥ 0.5 mm.

The foregoing technical solution enables the first isolation plate to have a certain strength, such that the first isolation plate can separate the third tab portion from the body portion, reducing the risk of deformation of the first isolation plate.

In some implementations, minimum thickness of the second isolation plate is d2, where d2 ≥ 0.5 mm.

The foregoing technical solution enables the second isolation plate to have a certain strength, such that the second isolation plate can separate the third tab portion from the body portion, reducing the risk of deformation of the second isolation plate.

In some implementations, minimum thickness of an end portion of the first isolation plate farther away from the channel is greater than minimum thickness of an end portion of the first isolation plate closer to the channel. The end portion of the first isolation plate farther away from the channel has a greater thickness, so as to reduce the risk of the first isolation plate being bent around the end portion of the first isolation plate farther away from the channel when the first isolation plate and the first tab portion compress each other.

In some implementations, the third tab portion includes a first segment, a second segment, and a first bending segment. The first segment is connected to the second tab portion; and the second segment is located on a side of the first segment facing away from the body portion and connected to the electrode lead-out member. The first bending segment is configured to connect the first segment and the second segment, at least a portion of the first isolation plate being located between the first bending segment and the body portion. The first isolation plate insulates and isolates the first bending segment from the body portion, so as to reduce the risk of the first bending segment being inserted into the body portion, improving the safety.

In some implementations, the first isolation plate is provided with a third inclined surface on a side facing away from the end face of the body portion. In a first direction perpendicular to the end face, minimum distance between an end of the third inclined surface closer to the channel and the electrode lead-out member is less than minimum distance between an end of the third inclined surface farther away from the channel and the electrode lead-out member. In the first direction, at least a portion of the first segment and at least a portion of the second segment are located between the third inclined surface and the electrode lead-out member.

The third inclined surface is provided to increase space on a side of the first isolation plate facing away from the end face, which in turn provides more space for the first bending segment, reducing the risk of the first bending segment being compressed.

In some implementations, the tab includes a plurality of tab layers, and total thickness of the plurality of tab layers is T₁. In the first direction, the minimum distance between the end of the third inclined surface closer to the channel and the electrode lead-out member is H₁, where H₁ > 2T₁.

The first segment and the second segment are stacked substantially in the first direction, and space occupied by both in the first direction is approximately 2T₁. In the foregoing technical solution, H₁ > 2T₁, so as to provide space for the first segment and the second segment, which reduces pressure between the first segment and the first isolation plate and reduces friction between the first segment and the first isolation plate, reducing the risk of wear and cracking of the first segment.

In some implementations, in the first direction, the minimum distance between the end of the third inclined surface farther away from the channel and the electrode lead-out member is H₂, where H₂ > 3T₁.

In the foregoing technical solution, H₂ > 3T₁, so as to provide more space for the first bending segment, reducing the risk of the first bending segment being compressed.

In some implementations, the first isolation plate is provided with a first level surface on the side facing away from the end face of the body portion, the first level surface being perpendicular to the first direction and connected to the end of the third inclined surface farther away from the channel. In the first direction, at least a portion of the first level surface is located between the first bending segment and the body portion. In the first direction, minimum distance between the first level surface and the electrode lead-out member is greater than 3T₁.

A portion of the first isolation plate corresponding to the first level surface insulates and isolates the first bending segment from the body portion, so as to reduce the risk of the first bending segment being inserted into the body portion. The minimum distance between the first level surface and the electrode lead-out member is greater than 3T₁, so that more space can be formed on a side of the first level surface facing away from the body portion to reduce the risk of the first bending segment and the first level surface compressing each other.

In some implementations, the first isolation plate includes a first inclined surface facing the body portion. In the first direction, minimum distance between an end of the first inclined surface closer to the channel and the end face of the body portion is greater than minimum distance between an end of the first inclined surface farther away from the channel and the end face of the body portion; and in the first direction, one portion of the first tab portion is located between the first inclined surface and the end face of the body portion. In the first direction, minimum thickness of a portion of the first isolation plate located between the first inclined surface and the first level surface is greater than minimum thickness of a portion of the first isolation plate located between the first inclined surface and the third inclined surface.

The first inclined surface can shape the first tab portion, so as to reduce the risk of deformation of the first tab portion. Fitting of the first inclined surface and the second inclined surface can utilize space on a side of the first isolation plate facing the end face to the space on the side of the first isolation plate facing away from the end face, so as to maximize the space for bending of the third tab portion on the side of the first isolation plate facing away from the end face. With the first level surface provided, the portion of the first isolation plate located between the first inclined surface and the first level surface can have a greater thickness, thereby reducing the risk of the first isolation plate being bent around an end portion of the first isolation plate farther away from the channel.

In some implementations, the tab includes a plurality of tab layers that are stacked, the plurality of tab layers are gathered toward a middle region of the end face of the body portion, and the channel is located in a middle region of the isolation member.

The plurality of tab layers being gathered toward the middle region of the end face of the body portion can reduce misalignment of the tab layers. The channel being provided in the middle region of the isolation member can reduce distance between the channel and the gathered portion of the plurality of tab layers, making it easier for the plurality of tab layers to pass through the channel.

In some implementations, the tab includes a plurality of tab layers that are stacked, the plurality of tab layers are gathered toward a side region of the end face of the body portion, and the channel is located in a side region of the isolation member. The plurality of tab layers being gathered toward the side region of the end face of the body portion can reduce the number of bendings of the tab layers. The channel being provided in the side region of the isolation member can reduce distance between the channel and the gathered portion of the plurality of tab layers, making it easier for the plurality of tab layers to pass through the channel.

According to a second aspect, some embodiments of this application provide a battery including a plurality of battery cells according to any one of the implementations of the first aspect.

According to a third aspect, some embodiments of this application provide an electric apparatus including the battery cell according to any one of the implementations of the first aspect, where the battery cell is configured to supply electric energy.

### BRIEF DESCRIPTION OF DRAWINGS

To describe the technical solutions of the embodiments of this application more clearly, the following briefly describes the accompanying drawings required for describing the embodiments of this application. Apparently, the accompanying drawings described below show merely some embodiments of this application, and persons of ordinary skill in the art may still derive other drawings from the accompanying drawings without creative efforts.
FIG. 1 is a schematic structural diagram of a vehicle according to some embodiments of this application;
FIG. 2 is a schematic exploded view of a battery according to some embodiments of this application;
FIG. 3 is a schematic exploded view of a battery module shown in FIG. 2.

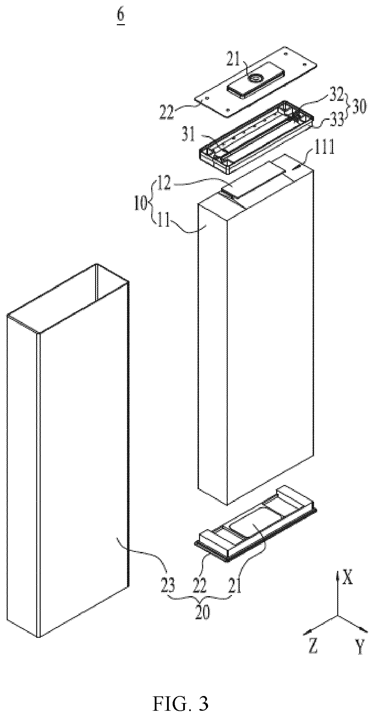

FIG. 3 is a schematic exploded view of a battery cell according to some embodiments of this application;

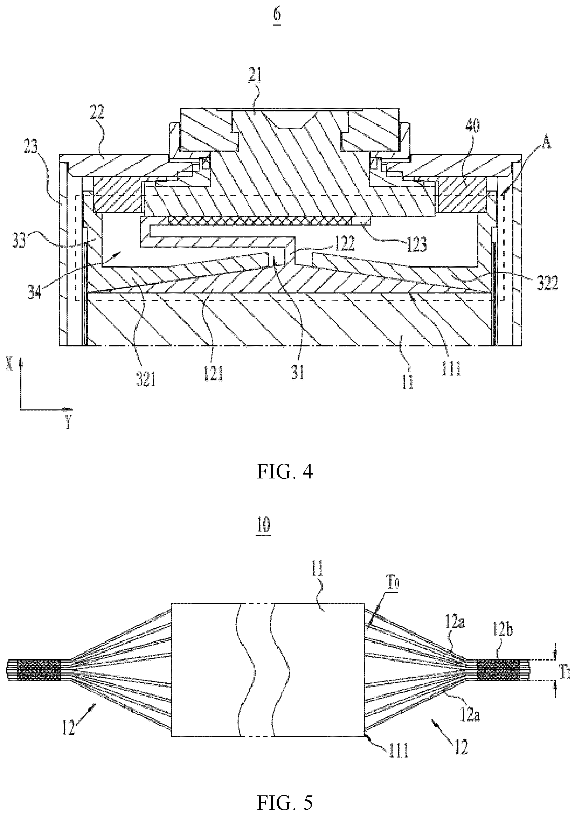

FIG. 4 is a partial schematic cross-sectional view of a battery cell according to some embodiments of this application;
FIG. 5 is a schematic structural diagram of an electrode assembly of a battery cell according to some embodiments of this application;

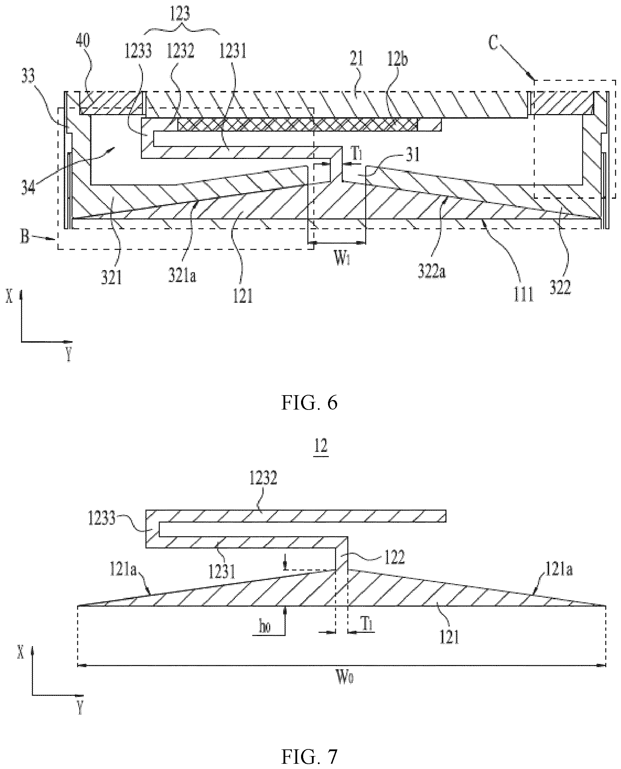

FIG. 6 is a schematic diagram of block A in FIG. 4 enlarged;
FIG. 7 is a schematic cross-sectional view of a tab of an electrode assembly of a battery cell according to some embodiments of this application;

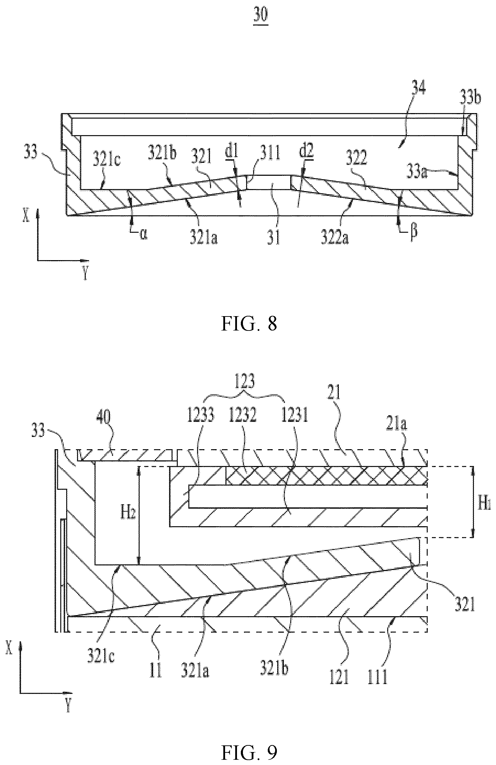

FIG. 8 is a schematic cross-sectional view of an isolation member of a battery cell according to some embodiments of this application;
FIG. 9 is a schematic diagram of block B in FIG. 6 enlarged;

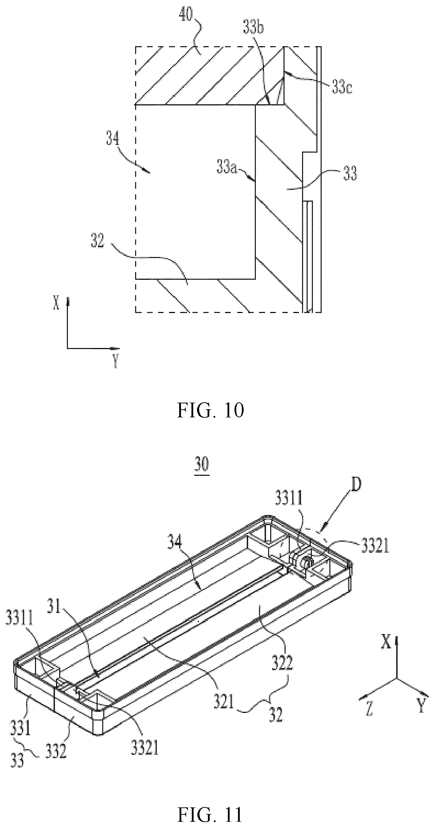

FIG. 10 is a schematic diagram of block C in FIG. 6 enlarged;
FIG. 11 is a schematic three-dimensional structural diagram of an isolation member of a battery cell according to some embodiments of this application;

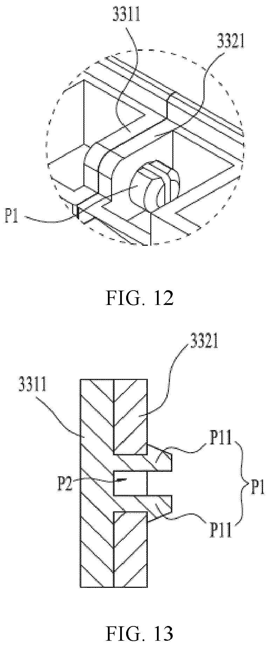

FIG. 12 is a schematic diagram of circle D in FIG. 11 enlarged;
FIG. 13 is a schematic cross-sectional view of a first snap-fit portion and a second snap-fit portion shown in FIG. 12;

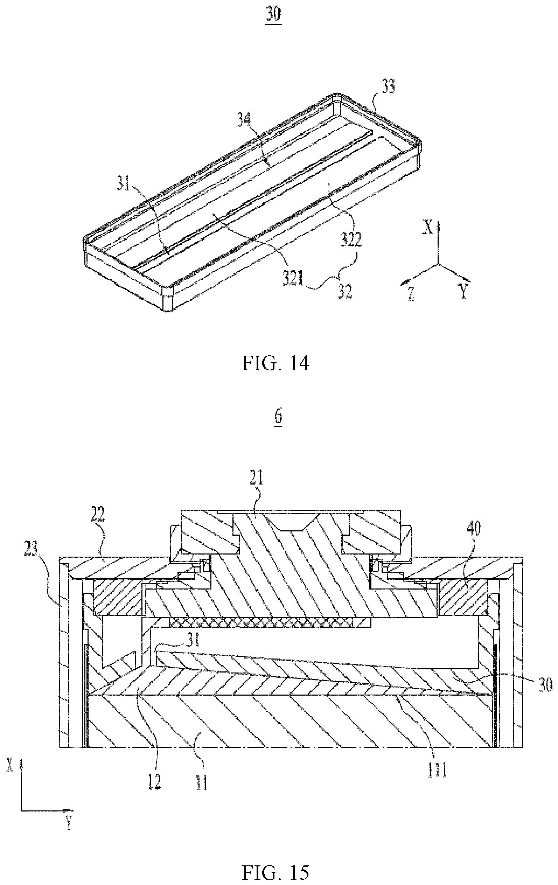

FIG. 14 is a schematic three-dimensional structural diagram of an isolation member of a battery cell according to some other embodiments of this application;
FIG. 15 is a partial schematic cross-sectional view of a battery cell according to some other embodiments of this application;

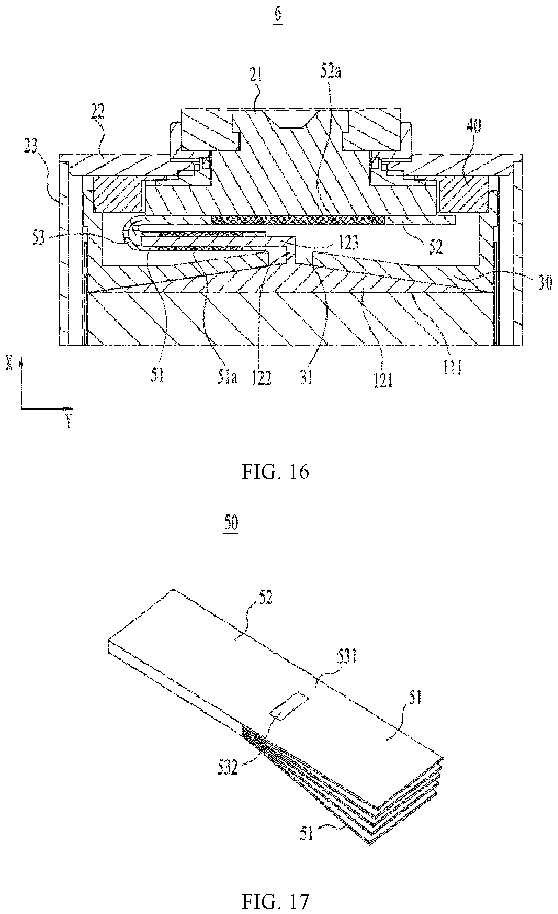

FIG. 16 is a partial schematic cross-sectional view of a battery cell according to still some other embodiments of this application; and
FIG. 17 is a schematic structural diagram of an adapter of a battery cell according to some other embodiments of this application.

### DESCRIPTION OF EMBODIMENTS

To make the objectives, technical solutions, and advantages of the embodiments of this application clearer, the following clearly and completely describes the technical solutions in the embodiments of this application with reference to the accompanying drawings in the embodiments of this application. Apparently, the described embodiments are some but not all of the embodiments of this application. All other embodiments obtained by persons of ordinary skill in the art based on the embodiments of this application without creative efforts shall fall within the protection scope of this application.

Unless otherwise defined, all technical and scientific terms used in this application shall have the same meanings as commonly understood by persons skilled in the art to which this application relates. The terms used in the specification of this application are intended to merely describe the specific embodiments rather than to limit this application. The terms "include", "comprise", and any variations thereof in the specification and claims of this application as well as the foregoing description of drawings are intended to cover non-exclusive inclusions. In the specification, claims, or accompanying drawings of this application, the terms "first", "second", and the like are intended to distinguish between different objects rather than to indicate a particular order or relative importance.

Reference to "embodiment" in this application means that specific features, structures, or characteristics described with reference to the embodiment may be included in at least one embodiment of this application. The word "embodiment" appearing in various places in the specification does not necessarily refer to the same embodiment or an independent or alternative embodiment that is exclusive of other embodiments.

In the description of this application, it should be noted that unless otherwise specified and defined explicitly, the terms "mount", "connect", "join", and "attach" should be understood in their general senses. For example, they may refer to a fixed connection, a detachable connection, or an integral connection; and a direct connection, an indirect connection via an intermediate medium, or an internal communication between two elements. Persons of ordinary skills in the art can understand specific meanings of these terms in this application as appropriate to specific situations.

The term "and/or" in this application is only an associative relationship for describing associated objects, indicating that three relationships may be present. For example, A and/or B may indicate the following three cases: presence of only A; presence of both A and B; and presence of only B. In addition, the character "/" in this application generally indicates an "or" relationship between the contextually associated objects.

In the embodiments of this application, the same reference signs denote the same components. For brevity, in different embodiments, detailed descriptions of the same components are not repeated. It should be understood that as shown in the accompanying drawings, sizes such as thickness, length, and width of various components and sizes such as thickness, length, and width of integrated devices in the embodiments of this application are merely for illustrative purposes and should not constitute any limitations on this application.

In this application, "a plurality of" means more than two (inclusive).

The term "parallel" in this application not only includes the absolutely parallel case, but also includes the substantially parallel case in the conventional understanding of engineering. Likewise, the term "perpendicular" not only includes the absolutely perpendicular case, but also includes the substantially perpendicular case in the conventional understanding of engineering.

In this application, a battery cell may include a lithium-ion battery cell, a lithium-sulfur battery cell, a sodium-lithium-ion battery cell, a sodium-ion battery cell, a magnesium-ion battery cell, or the like. This is not limited in the embodiments of this application.

The battery mentioned in the embodiments of this application is a single physical module that includes a plurality of battery cells for providing a higher voltage and capacity. A battery may typically include a box for packaging one or more battery cells. The box can prevent a liquid or another foreign matter from affecting charging or discharging of the battery cells.

The battery cell includes an electrode assembly and an electrolyte. The electrode assembly includes a positive electrode plate, a negative electrode plate, and a separator. The battery cell mainly relies on migration of metal ions between the positive electrode plate and the negative electrode plate to work. The positive electrode plate includes a positive electrode current collector and a positive electrode active substance layer. The positive electrode active substance layer is applied on a surface of the positive electrode current collector. The positive electrode current collector includes a positive electrode current collecting portion and a positive tab. The positive electrode current collecting portion is coated with the positive electrode active substance layer, and the positive tab is coated with no positive electrode active substance layer. A lithium-ion battery is used as an example, for which, the positive electrode current collector may be made of aluminum, the positive electrode active substance layer includes a positive electrode active substance, and the positive electrode active substance may be lithium cobalt oxide, lithium iron phosphate, ternary lithium, lithium manganate, or the like. The negative electrode plate includes a negative electrode current collector and a negative electrode active substance layer. The negative electrode active substance layer is applied on a surface of the negative electrode current collector. The negative electrode current collector includes a negative electrode current collecting portion and a negative tab. The negative electrode current collecting portion is coated with the negative electrode active substance layer, and the negative tab is coated with no negative electrode active substance layer. The negative electrode current collector may be made of copper, the negative electrode active substance layer includes a negative electrode active substance, and the negative electrode active substance may be carbon, silicon, or the like. The separator may be made of PP (polypropylene, polypropylene), PE (polyethylene, polyethylene), or the like.

The electrode assembly includes a body portion and tab portions led out of the body portion. The body portion is an electrical production portion of the electrode assembly, and active substances inside the body portion are used for electrochemical reactions with the electrolyte and the like to produce charging and discharging processes. The tab is used for external electrical connection to achieve charging and discharging of the electrode assembly.

The inventors have noticed that when the battery cell is subjected to an external impact, the tab may deform, and the deformed tab may be inserted into the body portion, leading to the risk of conductive connection between the positive and negative electrodes, resulting in safety hazards.

In view of this, the embodiments of this application provide a technical method where an isolation member is disposed inside the battery cell to insulate and isolate at least a portion of the tab from the body portion, reducing the risk of the tab being inserted into the body portion, and improving safety.

The technical solutions described in the embodiments of this application are applicable to electric apparatuses using a battery.

The electric apparatus may be a vehicle, a mobile phone, a portable device, a notebook computer, a ship, a spacecraft, an electric toy, an electric tool, or the like. The vehicle may be a fossil fuel vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, for example, a game console, an electric toy car, an electric toy ship, and an electric toy airplane. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer. The embodiments of this application impose no special limitation on the foregoing electric apparatus.

For ease of description, the electric apparatus being a vehicle is used as an example for description of the following embodiments.

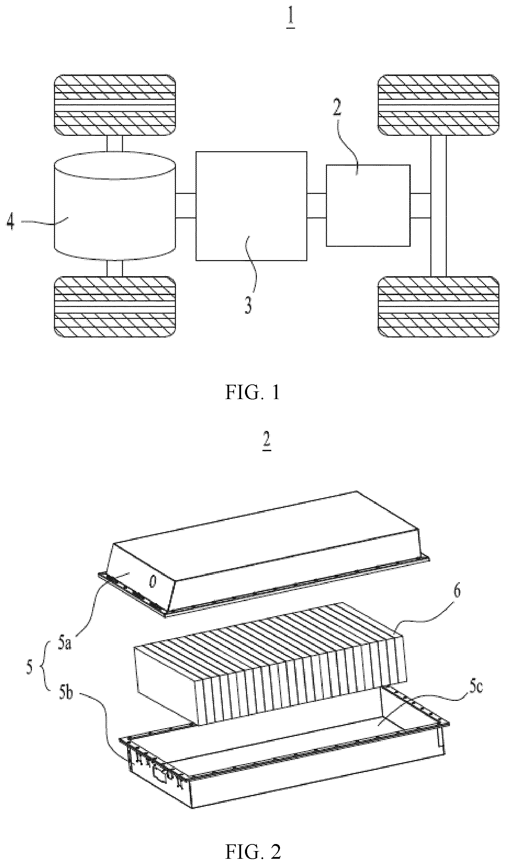

FIG. 1 is a schematic structural diagram of a vehicle according to some embodiments of this application.

As shown in FIG. 1, the vehicle 1 is provided with a battery 2 inside, where the battery 2 may be disposed at the bottom, front, or rear of the vehicle 1. The battery 2 may be configured to supply power to the vehicle 1. For example, the battery 2 may be used as an operational power source for the vehicle 1.

The vehicle 1 may further include a controller 3 and a motor 4, where the controller 3 is configured to control the battery 2 to supply power to the motor 4, for example, to satisfy power needs of start, navigation, and driving of the vehicle 1.

In some embodiments of this application, the battery 2 can be used as not only the operational power source for the vehicle 1 but also a driving power source for the vehicle 1, replacing or partially replacing fossil fuel or natural gas to provide driving traction for the vehicle 1.

FIG. 2 is a schematic exploded view of a battery according to some embodiments of this application.

As shown in FIG. 2, the battery 2 includes a box 5 and battery cells 6, where the battery cells 6 are accommodated in the box 5.

The box 5 is configured to accommodate the battery cells 6, and the box 5 may be a variety of structures. In some embodiments, the box 5 may include a first box portion 5a and a second box portion 5b. The first box portion 5a and the second box portion 5b fit together to jointly define an accommodating space 5c for accommodating the battery cells 6. The second box portion 5b may be a hollow structure with an opening at one end, the first box portion 5a is a plate-shaped structure, and the first box portion 5a covers the opening side of the second box portion 5b so as to form the box 5 having the accommodating space 5c. Alternatively, both the first box portion 5a and the second box portion 5b may be hollow structures with an opening at one side, and the opening side of the first box portion 5a is engaged with the opening side of the second box portion 5b so as to form the box 5 having the accommodating space 5c. Certainly, the first box portion 5a and the second box portion 5b may be of various shapes, such as cylinder or cuboid.

In order to improve airtightness after connection of the first box portion 5a and the second box portion 5b, a sealing member, such as sealing gum and sealing ring, may further be disposed between the first box portion 5a and the second box portion 5b.

Assuming that the first box portion 5a fits on the top of the second box portion 5b, the first box portion 5a may also be referred to as an upper box part and the second box portion 5b may also be referred to as a lower box part.

In the battery 2, one or more battery cells 6 may be provided. If a plurality of battery cells 6 are provided, the plurality of battery cells 6 may be connected in series, parallel, or series-parallel, where being connected in series-parallel means that the plurality of battery cells 6 are connected in both series and parallel. The plurality of battery cells 6 may be directly connected in series, parallel, or series-parallel, and then an entirety of the plurality of battery cells 6 is accommodated in the box 5; or certainly, the plurality of battery cells 6 may be connected in series, parallel, or series-parallel first to form a battery module, and then a plurality of battery modules are connected in series, parallel, or series-parallel to form an entirety which is accommodated in the box 5.

FIG. 3 is a schematic exploded view of a battery cell according to some embodiments of this application; FIG. 4 is a partial schematic cross-sectional view of a battery cell according to some embodiments of this application; FIG. 5 is a schematic structural diagram of an electrode assembly of a battery cell according to some embodiments of this application; FIG. 6 is a schematic diagram of block A in FIG. 4 enlarged; FIG. 7 is a schematic cross-sectional view of a tab of an electrode assembly of a battery cell according to some embodiments of this application; and FIG. 8 is a schematic cross-sectional view of an isolation member of a battery cell according to some embodiments of this application.

Referring to FIG. 3 to FIG. 8, the battery cell 6 in these embodiments of this application includes a housing 20, an electrode assembly 10, and an isolation member 30. The housing 20 is provided with an electrode lead-out member 21. The electrode assembly 10 is accommodated in the housing 20. The electrode assembly 10 includes a body portion 11 and a tab 12 led out of an end face 111 of the body portion 11. At least a portion of the isolation member 30 is disposed between the electrode lead-out member 21 and the end face 111 of the body portion 11. The isolation member 30 is provided with a channel 31, and the tab 12 passes through the channel 31 and is electrically connected to the electrode lead-out member 21.

The housing 20 is a hollow structure, and an accommodating cavity is formed inside it for accommodating the electrode assembly 10 and an electrolyte. The shape of the housing 20 may be determined based on a specific shape of the electrode assembly 10. For example, if the electrode assembly 10 is a cuboid structure, a cuboid housing may be selected; and if the electrode assembly 10 is a cylindrical structure, a cylindrical housing may be selected.

The housing 20 may be made of various materials, for example, the housing 20 may be made of metal or plastic. Optionally, the housing 20 may be made of copper, iron, aluminum, steel, aluminum alloy, or the like.

The electrode lead-out member 21 is configured to electrically connect the electrode assembly 10 to an external circuit of the battery cell 6 to achieve charging and discharging of the electrode assembly 10. For example, at least a portion of the electrode lead-out member 21 is exposed to the outside of the battery cell 6 for ease of connection to other members (for example, a busbar), which in turn leads out electric energy generated by the electrode assembly 10.

The electrode lead-out member 21 may be directly connected to the tab 12, or may be indirectly connected to the tab 12 via other conductive structures.

The electrode assembly 10 includes a positive electrode plate and a negative electrode plate. For example, the electrode assembly 10 generates electric energy through oxidation and reduction reactions during intercalation/deintercalation of ions in the positive electrode plate and the negative electrode plate.

Optionally, the electrode assembly 10 further includes a separator, where the separator is used to insulate and isolate the positive electrode plate from the negative electrode plate.

The electrode assembly 10 may be a wound electrode assembly, a laminated electrode assembly, or other types of electrode assemblies. For example, the electrode assembly 10 may be formed by winding the positive electrode plate, the separator, and the negative electrode plate.

The electrode assembly 10 includes the body portion 11 and the tab 12 led out of the end face 111 of the body portion 11. For example, the body portion 11 may include a portion of the positive electrode plate coated with an active substance layer, a portion of the negative electrode plate coated with an active substance layer, and the separator. Active substances in the active substance layers are used for electrochemical reactions with the electrolyte and the like to produce charging and discharging processes. Optionally, an edge of the separator forms the end face 111 of the body portion 11.

The tab 12 may be provided in plurality. The plurality of tabs 12 include a positive electrode tab and a negative electrode tab, where the positive electrode tab and the negative electrode tab may be led out of a same end of the body portion 11 or may be led out of two opposite ends of the body portion 11 respectively. For example, the electrode lead-out member 21 may be provided in two, and the two electrode lead-out members 21 are electrically connected to the positive electrode tab and the negative electrode tab respectively.

The isolation member 30 may be entirely located between the electrode lead-out member 21 and the body portion 11 or may be only partly located between the electrode assembly 10 and the body portion 11.

The isolation member 30 may be an integrated structure or a separate structure. For example, the isolation member 30 may be formed by connecting a plurality of independently formed parts.

For example, the channel 31 can be used to connect space between the isolation member 30 and the end face 111 to space between the isolation member 30 and the electrode lead-out member 21, so that the tab 12 can be connected to the electrode lead-out member 21.

The portion of the tab 12 accommodated in the channel 31 and the channel 31 may be in interference fit, clearance fit, or transition fit.

In these embodiments of this application, the isolation member 30 can insulate and isolate at least a portion of the tab 12 passing through the channel 31 from the end face 111 of the body portion 11, thereby reducing the risk of the tab 12 being inserted into the body portion 11 when the battery cell 6 is subjected to an external impact, reducing short circuit hazards, improving safety.

In some embodiments, the housing 20 includes an end cover 22 and a housing body 23.

The housing body 23 is a component configured to form an internal cavity of the battery cell 6 by fitting with the end cover 22, where the formed internal cavity may be used to accommodate the electrode assembly 10, the electrolyte, and other components.

The housing body 23 and the end cover 22 may be independent components. For example, an opening may be provided in the housing body 23, and the end cover 22 covers the opening to form the internal cavity of the battery cell 6.

The housing body 23 may be of various shapes and sizes, such as a cuboid shape, a cylindrical shape, and a hexagonal prism shape. Specifically, the shape of the housing body 23 may be determined according to a specific shape and size of the electrode assembly 10. The housing body 23 may be made of various materials, such as copper, iron, aluminum, stainless steel, aluminum alloy, and plastic, which are not particularly limited in the embodiments of this application.

The shape of the end cover 22 may be adapted to the shape of the housing body 23 to fit the housing body 23. Optionally, the end cover 22 may be made of a material with specified hardness and strength (for example, aluminum alloy), so that the end cover 22 is not prone to deform when subjected to compression and collision, allowing the battery cell 6 to have higher structural strength and improved safety performance.

In some embodiments, two opposite ends of the housing body 23 each have an opening, the end cover 22 is provided in two, and the two end covers 22 cover the openings on the two ends of the housing body 23 respectively.

In some embodiments, the electrode lead-out member 21 and the end cover 22 may be independent components, and the electrode lead-out member 21 may be mounted to the end cover 22. In some alternative embodiments, the electrode lead-out member 21 and the end cover 22 may be integrally formed.

In some embodiments, the tab 12 includes a plurality of tab layers 12a, the plurality of tab layers 12a being stacked. Providing the plurality of tab layers 12a can improve current flow capacity of the tab 12 and reduce heat generated by the tab 12, reducing the risk of fusing of the tab 12.

For example, the tab layer 12a is a metal foil material, with no active substance layer applied on its surface.

The plurality of tab layers 12a are gathered toward a middle region of the end face 111 of the body portion 11 or may be gathered toward a side region of the end face 111 of the body portion 11.

In some embodiments, the tab 12 is provided with a first fusion region 12b; and in the first fusion region 12b, the plurality of tab layers 12a are connected. For example, the plurality of tab layers 12a may be welded by ultrasonic welding to form the first fusion region 12b. Providing the first fusion region 12b can gather and connect the plurality of tab layers 12a, thereby reducing the risk of misalignment of the plurality of tab layers 12a in the subsequent assembly process.

In some embodiments, the tab 12 includes a plurality of tab layers 12a, a portion of the plurality of tab layers 12a being stacked in the channel 31. Size of the channel 31 in its width direction is W₁, total thickness of the plurality of tab layers 12a is T₁, and W₁ and T₁ satisfy W₁ > T₁.

Thickness of each tab layer 12a is T₀, and the number of tab layers 12a of the tab 12 is n, n being a positive integer greater than 1. T₁ = T₀ × n.

The width direction of the channel 31 is substantially parallel to a stacking direction of the plurality of tab layers 12a located in the channel 31.

If W₁ ≤ T₁, walls of the channel 31 clamp the plurality of tab layers 12a. When the body portion 11 sways due to the battery cell 6 being subjected to an external impact, it is difficult for the portion of the tab layers 12a located in the channel 31 to release stress through deformation, which leads to stress concentration of the tab layers 12a, triggering the risk of cracking of the tab layers 12a. In these embodiments of this application, W₁ > T₁, so as to provide movement space for the tab layers 12a in the channel 31 to reduce the stress concentration, reducing the risk of cracking of the tab layers 12a.

In some embodiments, W₁ and T₁ satisfy 0.5 mm ≤ W₁ - T₁ ≤ 4 mm.

A smaller value of W₁ - T₁ means smaller movement space for the tab layers 12a in the channel 31. If W₁ - T₁ is excessively small, when the body portion 11 sways due to the battery cell 6 being subjected to an external impact, the tab layers 12a are prone to friction against the walls of the channel 31, triggering the risk of wear of the tab layers 12a. In view of this, the inventors have made the value of W₁ - T₁ greater than or equal to 0.5 mm, so as to reduce the risk of frictional wear of the tab layers 12a, ensuring the current flow capacity of the tab 12.

If the value of W₁ - T₁ is excessively large, it is difficult for the walls of the channel 31 to effectively restrain the tab layers 12a, and the tab layers 12a are prone to excessive deformation, triggering the risk of the tab layers 12a being inserted inversely into the body portion 11. In view of this, the inventors have made the value of W₁ - T₁ less than or equal to 4 mm, so as to effectively restrain the plurality of tab layers 12a.

In conclusion, with the value of W₁ - T₁ limited to 0.5 mm-4 mm, the plurality of tab layers 12a are in an uncompressed state in the channel 31, which can not only restrain the plurality of tab layers 12a to some extent, reducing deformation of the tab layers 12a, but also reduce frictional forces between the tab layers 12a and the walls of the channel 31, reducing the risk of frictional wear of the tab layers 12a.

Optionally, the value of W₁ - T₁ is 0.5 mm, 1 mm, 1.5 mm, 2 mm, 2.5 mm, 3 mm, 3.5 mm, or 4 mm.

In some embodiments, W₁ and T₁ satisfy 1 mm ≤ W₁ - T₁ ≤ 3 mm.

In some embodiments, during assembly of the battery cell 6, the tab 12 may pass through the channel 31 first, and then the tab 12 is connected to the electrode lead-out member 21. In an alternative embodiment, the tab 12 may be connected to the electrode lead-out member 21 first, and then the isolation member 30 is mounted.

In some embodiments, an angle between an axial direction of the channel 31 and the end face 111 is an acute angle, a right angle, or an obtuse angle.

The axial direction of the channel 31 is a direction parallel to the center axis of the channel 31. For example, the axial direction of the channel 31 is perpendicular to the width direction of the channel 31.

For example, the channel 31 includes two side walls 311 opposite each other in its width direction, and the plurality of tab layers 12a are stacked between the two side walls 311.

For example, the two side walls 311 are parallel to the axial direction and perpendicular to the width direction.

In some embodiments, the axial direction of the channel 31 is perpendicular to the end face 111 of the body portion 11. In these embodiments, difficulty of the tab 12 passing through the channel 31 can be reduced, decreasing the maximum angle of bending of the tab layers 12a.

In some embodiments, the axial direction of the channel 31 is parallel to a first direction X, and the width direction of the channel 31 is parallel to a second direction Y The first direction X is perpendicular to the end face 111 of the body portion 11. The second direction Y is parallel to the end face 111 and perpendicular to the first direction X. Roots of the plurality of tab layers 12a connected to the body portion 11 are arranged along the second direction Y.

In some embodiments, the tab 12 includes a plurality of tab layers 12a that are stacked, the plurality of tab layers 12a are gathered toward a middle region of the end face 111 of the body portion 11, and the channel 31 is located in a middle region of the isolation member 30.

For example, the middle region of the end face 111 is a region of the end face 111 close to the center of the end face 111 in the second direction Y Optionally, a ratio of size of the middle region of the end face 111 in the second direction Y to total size of the end face 111 in the second direction Y is 5%-20%.

For example, the middle region of the isolation member 30 is a region of the isolation member 30 close to the center of the isolation member 30 in the second direction Y Optionally, a ratio of size of the middle region of the isolation member 30 in the second direction Y to total size of the isolation member 30 in the second direction Y is 5%-20%.

The plurality of tab layers 12a being gathered toward the middle region of the end face 111 of the body portion 11 can reduce misalignment of the tab layers 12a. The channel 31 being provided in the middle region of the isolation member 30 can reduce distance between the channel 31 and the gathered portion of the plurality of tab layers 12a, making it easier for the plurality of tab layers 12a to pass through the channel 31.

In some embodiments, the tab 12 includes a first tab portion 121, a second tab portion 122, and a third tab portion 123. The first tab portion 121 is connected to the body portion 11, at least a portion of the first tab portion 121 being located between the isolation member 30 and the body portion 11. The second tab portion 122 is connected to an end of the first tab portion 121 facing away from the body portion 11, the second tab portion 122 being accommodated in the channel 31. The third tab portion 123 is connected to an end of the second tab portion 122 facing away from the first tab portion 121 and configured to connect the electrode lead-out member 21, at least a portion of the isolation member 30 being located between the third tab portion 123 and the body portion 11.

At the first tab portion 121, the plurality of tab layers 12a are gathered together. At the first tab portion 121, the plurality of tab layers 12a are independent from each other and are not directly connected to each other.

The third tab portion 123 may be directly connected to the electrode lead-out member 21 to electrically connect the electrode lead-out member 21 and the tab 12. Alternatively, the third tab portion 123 may be indirectly connected to the electrode lead-out member 21 via other conductive structures to electrically connect the electrode lead-out member 21 and the tab 12.

At least a portion of the isolation member 30 is located between the third tab portion 123 and the body portion 11, so as to insulate and isolate the third tab portion 123 from the end face 111 of the body portion 11, thereby reducing the risk of the third tab portion 123 being inserted into the body portion 11, improving the safety.

In some embodiments, the third tab portion 123 includes a first segment 1231, a second segment 1232, and a first bending segment 1233. The first segment 1231 is connected to the second tab portion 122, at least a portion of the isolation member 30 being located between the first segment 1231 and the body portion 11. The second segment 1232 is located on a side of the first segment 1231 facing away from the body portion 11 and connected to the electrode lead-out member 21. The first bending segment 1233 is configured to connect the first segment 1231 and the second segment 1232.

The first bending segment 1233 is bent relative to the first segment 1231 and bent relative to the second segment 1232.

The first segment 1231 may be parallel to the second segment 1232. Alternatively, an included angle greater than 0° may be formed between the first segment 1231 and the second segment 1232.

In these embodiments of this application, the third tab portion 123 is bent into two layers, so as to reduce space occupied by the third tab portion 123 in a direction perpendicular to the end face 111, increasing energy density of the battery cell 6. The isolation member 30 can insulate and isolate the first segment 1231 from the end face 111 of the body portion 11, thereby reducing the risk of the first segment 1231 being inserted into the body portion 11, improving the safety.

In some embodiments, the second segment 1232 is parallel to the end face 111 of the body portion 11. In these embodiments, being parallel means being substantially parallel, allowing for some errors. For example, if an included angle between the second segment 1232 and the end face 111 is less than 10°, the second segment 1232 can be considered to be parallel to the end face 111 of the body portion 11.

In these embodiments, the first segment 1231 and the second segment 1232 are both parallel to the end face 111 of the body portion 11, so as to reduce the space occupied by the third tab portion 123 in the direction perpendicular to the end face 111, increasing the energy density of the battery cell 6.

In some embodiments, the first segment 1231 is parallel to the end face 111 of the body portion 11. For example, if an included angle between the first segment 1231 and the end face 111 is less than 10°, the first segment 1231 can be considered to be parallel to the end face 111 of the body portion 11.

In some embodiments, the first segment 1231 is bent relative to the second tab portion 122.

In some embodiments, the third tab portion 123 is provided with a first fusion region 12b, the first fusion region 12b is located only on the second segment 1232, and at least a portion of the first fusion region 12b is connected to the electrode lead-out member 21.

The first fusion region 12b may be connected to the electrode lead-out member 21 by welding, bonding, snap-fitting, or the like. The plurality of tab layers 12a are connected in the first fusion region 12b, so as to reduce the risk of misalignment of the plurality of tab layers 12a in the subsequent assembly process.

During bending of the third tab portion 123, the first fusion region 12b is located only on the second segment 1232, such that the first fusion region 12b avoids the bending position of the third tab portion 123, reducing the risk of cracking of the first fusion region 12b.

In some embodiments, the isolation member 30 includes an isolation plate 32, the isolation plate 32 is provided with the channel 31, and at least a portion of the isolation plate 32 is located between the third tab portion 123 and the body portion 11.

The isolation plate 32 may be an integrated structure or a separate structure.

The isolation plate 32 can insulate and isolate the third tab portion 123 from the end face 111 of the body portion 11, thereby reducing the risk of the third tab portion 123 being inserted into the body portion 11, improving the safety.

In some embodiments, the isolation plate 32 includes a first isolation plate 321 and a second isolation plate 322 that are spaced apart, the channel 31 being formed between the first isolation plate 321 and the second isolation plate 322. One portion of the first tab portion 121 is located between the first isolation plate 321 and the body portion 11, and the other portion of the first tab portion 121 is located between the second isolation plate 322 and the body portion 11.

The first isolation plate 321 and the second isolation plate 322 can limit the first tab portion 121, so as to reduce swaying and deformation of the first tab portion 121 when the battery cell 6 is subjected to an external impact.

In some embodiments, the first isolation plate 321 includes a first inclined surface 321a facing the body portion 11. In the first direction X perpendicular to the end face 111, minimum distance between an end of the first inclined surface 321a closer to the channel 31 and the end face 111 of the body portion 11 is greater than minimum distance between an end of the first inclined surface 321a farther away from the channel 31 and the end face 111 of the body portion 11. In the first direction X, one portion of the first tab portion 121 is located between the first inclined surface 321a and the end face 111 of the body portion 11.

The plurality of tab layers 12a of the first tab portion 121 form a tab inclined surface 121a after gathered. Providing the first inclined surface 321a can reduce a gap between the first isolation plate 321 and the first tab portion 121, which in turn allows the first isolation plate 321 to limit and shape the first tab portion 121 and helps maintain morphology of the first tab portion 121.

For example, during assembly of the isolation member 30 and the electrode assembly 10, the tab 12 may pass through the channel 31 first, and then the isolation member 30 moves in a direction approaching the end face 111. During movement of the isolation member 30, the first inclined surface 321a may gradually gather the plurality of tab layers 12a of the tab 12.

For example, the first inclined surface 321a is a level surface, and an angle between the first inclined surface 321a and the end face 111 is an acute angle.

In some embodiments, an included angle between the first inclined surface 321a and the end face 111 is α, size of the first tab portion 121 in the first direction X is h₀, and size of the first tab portion 121 in the second direction Y is W₀, the second direction Y being a stacking direction of the plurality of tab layers 12a of the first tab portion 121 and perpendicular to the first direction X. α, h₀, and W₀ satisfy tanα ≥ 2h₀/W₀.

The plurality of tab layers 12a of the first tab portion 121 form two tab inclined surfaces 121a after gathered toward the middle, and 2h₀/W₀ is approximately a tangent value of one tab inclined surface 121a of the first tab portion 121.

If tanα is less than 2h₀/W₀, the first inclined surface 321a may excessively compress the tab inclined surface 121a during assembly of the isolation member 30, triggering the risk of cracking of the tab layers 12a.

In these embodiments of this application, tanα ≥ 2h₀/W₀, so that pressure between the first inclined surface 321a and the first tab portion 121 is reduced, reducing the risk of cracking of the tab layers 12a of the first tab portion 121.

In some embodiments, α is 15°-75°. Optionally, α is 15°, 30°, 45°, 60°, or 75°.

In some embodiments, α-arctan(2h₀/W₀) is < 15°, which allows for a small gap between the first inclined surface 321a and the first tab portion 121.

In some embodiments, α, h₀, and W₀ satisfy tanα = 2h₀/W₀. In these embodiments, the first inclined surface 321a may be substantially parallel to the tab inclined surface 121a of the first tab portion 121, which in turn reduces a gap between the first inclined surface 321a and the first tab portion 121 and allows the first inclined surface 321a to effectively shape the first tab portion 121.

In some embodiments, the first inclined surface 321a abuts against the first tab portion 121. The first inclined surface 321a abutting against the first tab portion 121 can shape the first tab portion 121 and maintain the morphology of the first tab portion 121.

In some embodiments, the second isolation plate 322 includes a second inclined surface 322a facing the body portion 11. In the first direction X, minimum distance between an end of the second inclined surface 322a closer to the channel 31 and the end face 111 of the body portion 11 is greater than minimum distance between an end of the second inclined surface 322a farther away from the channel 31 and the end face 111 of the body portion 11. In the first direction X, the other portion of the first tab portion 121 is located between the second inclined surface 322a and the end face 111 of the body portion 11.

Providing the second inclined surface 322a can reduce a gap between the second isolation plate 322 and the first tab portion 121, which in turn allows the second isolation plate 322 to shape the first tab portion 121 and helps maintain the morphology of the first tab portion 121.

In some embodiments, an included angle between the second inclined surface 322a and the end face 111 is β, where tanβ ≥ 2h₀/W₀. Optionally, tanβ = 2h₀/W₀.

In some embodiments, the included angle α between the first inclined surface 321a and the end face 111 is equal to the included angle β between the second inclined surface 322a and the end face 111.

In these embodiments, α is equal to β, so that difference in bending angles of tab layers 12a on the two outermost sides of the first tab portion 121 can be reduced, helping improve the morphology of the first tab portion 121.

In some embodiments, minimum thickness of the first isolation plate 321 is d1, where d1 ≥ 0.5 mm.

The minimum thickness of the first isolation plate 321 being greater than or equal to 0.5 mm enables the first isolation plate 321 to have a certain strength, such that the first isolation plate 321 can separate the third tab portion 123 from the body portion 11, reducing the risk of deformation of the first isolation plate 321.

In some embodiments, minimum thickness of the second isolation plate 322 is d2, where d2 ≥ 0.5 mm.

The minimum thickness of the second isolation plate 322 being greater than or equal to 0.5 mm enables the second isolation plate 322 to have a certain strength, such that the second isolation plate 322 can separate the third tab portion 123 from the body portion 11, reducing the risk of deformation of the second isolation plate 322.

In some embodiments, minimum thickness of an end portion of the first isolation plate 321 farther away from the channel 31 is greater than minimum thickness of an end portion of the first isolation plate 321 closer to the channel 31.

The end portion of the first isolation plate 321 farther away from the channel 31 has a greater thickness, so as to reduce the risk of the first isolation plate 321 being bent around the end portion of the first isolation plate 321 farther away from the channel 31 when the first isolation plate 321 and the first tab portion 121 compress each other.

In some embodiments, at least a portion of the second isolation plate 322 is located between the second segment 1232 and the end face 111 of the body portion 11. Optionally, a projection of a free end of the second segment 1232 farther away from the first bending segment 1233 in the first direction X is located within a projection of the second isolation plate 322 in the first direction X.

The second isolation plate 322 can separate the free end of the second segment 1232 from the end face 111 of the body portion 11, so as to reduce the risk of the free end of the second segment 1232 lapping onto the end face 111.

In some embodiments, in the first direction X, the first segment 1231 and the second isolation plate 322 do not overlap.

FIG. 9 is a schematic diagram of block B in FIG. 6 enlarged.

As shown in FIG. 9, in some embodiments, the third tab portion 123 includes a first segment 1231, a second segment 1232, and a first bending segment 1233. The first segment 1231 is connected to the second tab portion. The second segment 1232 is located on a side of the first segment 1231 facing away from the body portion 11 and connected to the electrode lead-out member 21. The first bending segment 1233 is configured to connect the first segment 1231 and the second segment 1232, at least a portion of the first isolation plate 321 being located between the first bending segment 1233 and the body portion 11.

The tab 12 includes a plurality of tab layers. At the first bending segment 1233, the plurality of tab layers are looser, so the first bending segment 1233 is easily inserted into the body portion 11 when the battery cell is subjected to an external impact. The first isolation plate 321 insulates and isolates the first bending segment 1233 from the body portion 11, so as to reduce the risk of the first bending segment 1233 being inserted into the body portion 11, improving the safety.

In some embodiments, the first isolation plate 321 is provided with a third inclined surface 321b on a side facing away from the end face 111 of the body portion 11. In a first direction X perpendicular to the end face 111, minimum distance between an end of the third inclined surface 321b closer to the channel 31 and the electrode lead-out member 21 is less than minimum distance between an end of the third inclined surface 321b farther away from the channel 31 and the electrode lead-out member 21. In the first direction X, at least a portion of the first segment 1231 and at least a portion of the second segment 1232 are located between the third inclined surface 321b and the electrode lead-out member 21.

At the first bending segment 1233, the plurality of tab layers are looser, meaning that the first bending segment 1233 occupies more space in the first direction X.

In these embodiments, the third inclined surface 321b is provided to increase space on a side of the first isolation plate 321 facing away from the end face 111, which in turn provides more space for the first bending segment 1233, reducing the risk of the first bending segment 1233 being compressed.

In some embodiments, the tab 12 includes a plurality of tab layers, and total thickness of the plurality of tab layers is T₁. In the first direction X, the minimum distance between the end of the third inclined surface 321b closer to the channel 31 and the electrode lead-out member 21 is H₁, where H₁ > 2T₁.

The first segment 1231 and the second segment 1232 are stacked substantially in the first direction X, and space occupied by both in the first direction X is approximately 2T₁. In these embodiments of this application, H₁ > 2T₁, so as to provide space for the first segment 1231 and the second segment 1232, which reduces pressure between the first segment 1231 and the first isolation plate 321 and reduces friction between the first segment 1231 and the first isolation plate 321, reducing the risk of wear and cracking of the first segment 1231.

For example, the electrode lead-out member 21 has a connecting surface 21a facing the end face 111. H₁ is minimum spacing between the end of the third inclined surface 321b closer to the channel 31 and the connecting surface 21a in the first direction X. Optionally, the connecting surface 21a is parallel to the end face 111.

In some embodiments, in the first direction X, the minimum distance between the end of the third inclined surface 321b farther away from the channel 31 and the electrode lead-out member 21 is H₂, where H₂ > 3T₁.

For example, H₂ is minimum spacing, in the first direction X, between the end of the third inclined surface 321b farther away from the channel 31 and a virtual plane in which the connecting surface 21a is located.

In these embodiments, H₂ > 3T₁, so as to provide more space for the first bending segment 1233, reducing the risk of the first bending segment 1233 being compressed.

In some embodiments, a projection of the first bending segment 1233 in the first direction X is located within a projection of the third inclined surface 321b in the first direction X.

In some other embodiments, the first isolation plate 321 is provided with a first level surface 321c on the side facing away from the end face 111 of the body portion 11, the first level surface 321c being perpendicular to the first direction X and connected to the end of the third inclined surface 321b farther away from the channel 31. In the first direction X, at least a portion of the first level surface 321c is located between the first bending segment 1233 and the body portion 11. In the first direction X, minimum distance between the first level surface 321c and the electrode lead-out member 21 is greater than 3T₁.

The first level surface 321c is parallel to the end face 111.

For example, the minimum distance between the first level surface 321c and the electrode lead-out member 21 is equal to H₂.

A portion of the first isolation plate 321 corresponding to the first level surface 321c insulates and isolates the first bending segment 1233 from the body portion 11, so as to reduce the risk of the first bending segment 1233 being inserted into the body portion 11. The minimum distance between the first level surface 321c and the electrode lead-out member 21 is greater than 3T₁, so that more space can be formed on a side of the first level surface 321c facing away from the body portion 11 to reduce the risk of the first bending segment 1233 and the first level surface 321c compressing each other.

In some embodiments, the first isolation plate 321 includes a first inclined surface 321a facing the body portion 11. In the first direction X, minimum distance between an end of the first inclined surface 321a closer to the channel 31 and the end face 111 of the body portion 11 is greater than minimum distance between an end of the first inclined surface 321a farther away from the channel 31 and the end face 111 of the body portion 11. In the first direction X, one portion of the first tab portion 121 is located between the first inclined surface 321a and the end face 111 of the body portion 11. In the first direction X, minimum thickness of a portion of the first isolation plate 321 located between the first inclined surface 321a and the first level surface 321c is greater than minimum thickness of a portion of the first isolation plate 321 located between the first inclined surface 321a and the third inclined surface 321b.

The first inclined surface 321a can shape the first tab portion 121, so as to reduce the risk of deformation of the first tab portion 121. Fitting of the first inclined surface 321a and the second inclined surface 322a can utilize space on a side of the first isolation plate 321 facing the end face 111 to the space on the side of the first isolation plate 321 facing away from the end face 111, so as to maximize the space for bending of the third tab portion 123 on the side of the first isolation plate 321 facing away from the end face 111. With the first level surface 321c provided, the portion of the first isolation plate 321 located between the first inclined surface 321a and the first level surface 321c can have a greater thickness, thereby reducing the risk of the first isolation plate 321 being bent around an end portion of the first isolation plate 321 farther away from the channel 31.

In some embodiments, the third inclined surface 321b is parallel to the first inclined surface 321a.

FIG. 10 is a schematic diagram of block C in FIG. 6 enlarged; FIG. 11 is a schematic three-dimensional structural diagram of an isolation member of a battery cell according to some embodiments of this application; FIG. 12 is a schematic diagram of circle D in FIG. 11 enlarged; and FIG. 13 is a partial schematic cross-sectional view of a first snap-fit portion and a second snap-fit portion shown in FIG. 12.

As shown in FIG. 9 to FIG. 13, in some embodiments, the isolation member 30 includes an isolation plate 32, the isolation plate 32 is provided with the channel 31, and at least a portion of the isolation plate 32 is located between the third tab portion 123 and the body portion 11.

In some embodiments, the isolation member 30 further includes a connecting plate 33, the connecting plate 33 surrounds an outer side of the isolation plate 32, and the connecting plate 33 protrudes out of a side of the isolation plate 32 facing away from the body portion 11 to define an accommodating recess 34 together with the isolation plate 32. At least a portion of the third tab portion 123 is accommodated in the accommodating recess 34.

The third tab portion 123 may be entirely accommodated in the accommodating recess 34 or may be only partly accommodated in the accommodating recess 34.

The connecting plate 33 can improve overall strength of the isolation member 30 and can also surround the third tab portion 123 to insulate and isolate the third tab portion 123 from at least a portion of the housing 20, improving the safety.

In some embodiments, the battery cell 6 further includes an insulating member 40 accommodated in the housing 20 and connected to the housing 20. At least a portion of the connecting plate 33 is located between the insulating member 40 and the end face 111 of the body portion 11.

The insulating member 40 and the end face 111 can limit the connecting plate 33 from two sides, so as to reduce a swaying range of the isolation member 30 when the battery cell 6 is subjected to an external impact.

In some embodiments, the insulating member 40 is made of plastic.

In some embodiments, the insulating member 40 is disposed on an inner surface of the end cover.

In some embodiments, in the first direction X perpendicular to the end face 111, at least a portion of the connecting plate 33 is clamped between the insulating member 40 and the end face 111 of the body portion 11.

The insulating member 40 and the end face 111 of the body portion 11 clamp at least a portion of the connecting plate 33 from two sides, so as to limit movement of the connecting plate 33 in the first direction X, which in turn reduces the swaying range of the isolation member 30 in the first direction X when the battery cell 6 is subjected to an external impact, improving the safety.

In some embodiments, at least a portion of the insulating member 40 is accommodated in the accommodating recess 34.

The portion of the insulating member 40 accommodated in the accommodating recess 34 can limit the isolation member 30, thereby limiting movement of the isolation member 30 in a direction perpendicular to the first direction X.

In some embodiments, an inner surface 33a of the connecting plate 33 is provided with a stepped surface 33b, and the portion of the insulating member 40 accommodated in the accommodating recess 34 abuts against the stepped surface 33b.

The inner surface 33a of the connecting plate 33 is a surface of the connecting plate 33 for defining the accommodating recess 34.

The stepped surface 33b may be provided in one, or may be provided in plurality. In some examples, the stepped surface 33b is provided in one, and the stepped surface 33b surrounds along a circumferential direction of the connecting plate 33. In some other examples, the stepped surface 33b is provided in plurality, and the plurality of stepped surfaces 33b are spaced apart along a circumferential direction of the connecting plate 33.

The insulating member 40 abuts against the stepped surface 33b to limit movement of the isolation member 30 in the first direction X.

In some embodiments, the stepped surface 33b is parallel to the end face 111.

In some embodiments, the inner surface 33a of the connecting plate 33 further includes a limiting surface 33c connected to the stepped surface 33b, and the limiting surface 33c surrounds an outer side of the insulating member 40 and is fitted to the insulating member 40.

The portion of the insulating member 40 accommodated in the accommodating recess 34 is fitted to the limiting surface 33c to limit movement of the limiting surface 33c.

The insulating member 40 and the end face 111 clamp the isolation member 30 to fix the isolation member 30 in the first direction X. The insulating member 40 is fitted to the limiting surface 33c of the connecting plate 33 to fix the isolation member 30 in the direction perpendicular to the first direction X.

In some embodiments, the portion of the insulating member 40 accommodated in the accommodating recess 34 is snap-fitted with the connecting plate 33 to fix the isolation member 30. In some alternative embodiments, the portion of the insulating member 40 accommodated in the accommodating recess 34 may be fused to the connecting plate 33.

In some embodiments, the isolation plate 32 includes a first isolation plate 321 and a second isolation plate 322 that are spaced apart, the channel 31 being formed between the first isolation plate 321 and the second isolation plate 322. The connecting plate 33 includes a first connecting plate 331 and a second connecting plate 332, where the first connecting plate 331 and the first isolation plate 321 are integrally formed, the second connecting plate 332 and the second isolation plate 322 are integrally formed, and the first connecting plate 331 and the second connecting plate 332 are independently formed and connected to each other.

The first connecting plate 331 may be connected to the second connecting plate 332 by snap-fitting, fusion, bonding, or the like.

In these embodiments, the isolation member 30 being separately formed allows for more flexible assembly of the isolation member 30 and the electrode assembly 10.

For example, the isolation member 30 includes two sub-members, where one sub-member includes the first connecting plate 331 and the first isolation plate 321, and the other sub-member includes the second connecting plate 332 and the second isolation plate 322. The two sub-members are independently formed.

In some examples, the isolation member 30 may be assembled first, and then the tab 12 passes through the channel 31 of the isolation member 30 before the tab 12 is connected to the electrode lead-out member 21. In some other examples, the tab 12 may be connected to the electrode lead-out member 21 first, and then two sub-members are mounted from two sides of the tab 12 to mount the assembled isolation member 30 on the tab 12.

In some embodiments, the first connecting plate 331 is snap-fitted with the second connecting plate 332. The snap-fitting can simplify the assembly process of the first connecting plate 331 and the second connecting plate 332.

The first connecting plate 331 includes two first snap-fit portions 3311, the two first snap-fit portions 3311 being disposed on two opposite ends of the first isolation plate 321 respectively. The second connecting plate 332 includes two second snap-fit portions 3321, the two second snap-fit portions 3321 being disposed on two opposite ends of the second isolation plate 322 respectively. The first snap-fit portions 3311 are snap-fitted with the second snap-fit portions 3321.

For example, the first snap-fit portions 3311 are disposed on two ends of the first isolation plate 321 in a third direction Z, the first direction X, the second direction Y, and the third direction Z being perpendicular to each other. The two second snap-fit portions 3321 are disposed on two ends of the second isolation plate 322 in the third direction Z.

Fitting of the two first snap-fit portions 3311 and the two second snap-fit portions 3321 can achieve fixing of the first connecting plate 331 and the second connecting plate 332, and further improve stability and reliability of the connection between the first connecting plate 331 and the second connecting plate 332.

In some embodiments, at least one of the first snap-fit portions 3311 is provided with a protrusion P1 and at least one of the second snap-fit portions 3321 is provided with a snap-fit hole P2, at least a portion of the protrusion P1 being accommodated in the snap-fit hole P2 to snap-fit the first snap-fit portion 3311 with the second snap-fit portion 3321.

In some examples, one first snap-fit portion 3311 is provided with a protrusion P1 and the other first snap-fit portion 3311 is provided with a snap-fit hole P2; and a second snap-fit portion 3321 fitting with the first snap-fit portion 3311 provided with the protrusion P1 is provided with a snap-fit hole P2, and a second snap-fit portion 3321 fitting with the first snap-fit portion 3311 provided with the snap-fit hole P2 is provided with a protrusion P1. In some other examples, the two first snap-fit portions 3311 are both provided with a protrusion P1, and the two second snap-fit portions 3321 are both provided with a snap-fit hole P2.

In these embodiments, the first snap-fit portions 3311 are snap-fitted with the second snap-fit portions 3321 through fitting of the protrusions P1 and the snap-fit holes P2.

In some embodiments, one first snap-fit portion 3311 is provided with a protrusion P1 and the other first snap-fit portion 3311 is provided with a snap-fit hole P2; and a second snap-fit portion 3321 fitting with the first snap-fit portion 3311 provided with the protrusion P1 is provided with a snap-fit hole P2, and a second snap-fit portion 3321 fitting with the first snap-fit portion 3311 provided with the snap-fit hole P2 is provided with a protrusion P1.

In these embodiments, the two sub-members of the isolation member 30 can employ the same structure to improve interchangeability.

In some embodiments, the protrusion P1 is made of a flexible material.

In some embodiments, the protrusion P1 includes two spaced-apart sub-protrusions P11, the sub-protrusions P11 each are provided with a flange, and after the sub-protrusions P11 pass through the snap-fit hole P2, the flanges are snap-fitted with the second snap-fit portion 3321.

FIG. 14 is a schematic three-dimensional structural diagram of an isolation member of a battery cell according to some other embodiments of this application.

As shown in FIG. 14, the isolation member 30 is an integrally formed structure. Providing the isolation member 30 as the integrally formed structure allows the isolation member 30 to have high overall strength and eliminate the assembly process of the isolation member 30.

FIG. 15 is a partial schematic cross-sectional view of a battery cell according to some other embodiments of this application.

As shown in FIG. 15, in some embodiments, the tab 12 includes a plurality of tab layers that are stacked, the plurality of tab layers are gathered toward a side region of the end face 111 of the body portion 11, and the channel 31 is located in a side region of the isolation member 30.

For example, the side region of the end face 111 is a region of the end face 111 close to an edge of the end face 111 in the second direction Y. Optionally, a ratio of size of the side region of the end face 111 in the second direction Y to total size of the end face 111 in the second direction Y is 10%-30%.

For example, the side region of the isolation member 30 is a region of the isolation member 30 close to an edge of the isolation member 30 in the second direction Y Optionally, a ratio of size of the side region of the isolation member 30 in the second direction Y to total size of the isolation member 30 in the second direction Y is 10%-30%.

The plurality of tab layers being gathered toward the side region of the end face 111 of the body portion 11 can reduce the number of bendings of the tab layers. The channel 31 being provided in the side region of the isolation member 30 can reduce distance between the channel 31 and the gathered portion of the plurality of tab layers, making it easier for the plurality of tab layers to pass through the channel 31.

As shown in FIG. 4, when the plurality of tab layers are gathered toward the middle region of the end face 111 of the body portion 11, if the portion of the tab layers passing through the channel 31 is bent directly to one side, it will result in a small connection area between the tab layers and the electrode lead-out member 21, affecting current flow. Therefore, the portion of the tab layers passing through the channel 31 shown in FIG. 4 is bent twice, so as to ensure the connection area between the tab layers and the electrode lead-out member 21. In the battery cell 6 shown in FIG. 15, the plurality of tab layers are gathered toward the side region of the end face 111 of the body portion 11, so the portion of the tab layers passing through the channel 31 is bent directly to one side, which can ensure the connection area between the tab layers and the electrode lead-out member 21. Therefore, the plurality of tab layers being gathered toward the side region of the end face 111 of the body portion 11 can reduce the number of bendings of the tab layers.

FIG. 16 is a partial schematic cross-sectional view of a battery cell according to still some other embodiments of this application; and FIG. 17 is a schematic structural diagram of an adapter of a battery cell according to some other embodiments of this application. FIG. 17 shows the adapter before bending.

As shown in FIG. 16 and FIG. 17, in some embodiments, the battery cell 6 further includes an adapter 50. The adapter 50 includes a tab connecting portion 51, an electrode connecting portion 52, and a second bending segment 53. The tab connecting portion 51 is connected to the third tab portion 123; the electrode connecting portion 52 is located on a side of the tab connecting portion 51 facing away from the body portion 11 and connected to the electrode lead-out member 21; and the second bending segment 53 is configured to connect the tab connecting portion 51 and the electrode connecting portion 52.

The tab connecting portion 51 may be provided in one or plurality, which is not limited in these embodiments.

The second bending segment 53 is bent relative to the tab connecting portion 51 and bent relative to the electrode connecting portion 52.

The tab connecting portion 51 may be parallel to the electrode connecting portion 52. Alternatively, an included angle greater than 0° may also be formed between the tab connecting portion 51 and the electrode connecting portion 52.

The electrode connecting portion 52 may be connected to the electrode lead-out member 21 by welding, bonding, riveting, snap-fitting, or the like, and the tab connecting portion 51 may be connected to the third tab portion 123 by welding, bonding, riveting, snap-fitting, or the like.

In these embodiments, the adapter 50 is provided to connect the third tab portion 123 and the electrode lead-out member 21, which can reduce the requirement for the size of the third tab portion 123 and reduce assembly difficulty.

In some embodiments, the tab connecting portion 51 is provided in plurality. The plurality of tab connecting portions 51 and the plurality of tab layers are stacked and connected.

Optionally, at least one tab layer is provided between any two adjacent tab connecting portions 51.

The plurality of tab connecting portions 51 and the plurality of tab layers being stacked can increase contact area between the adapter 50 and the tab 12, improve connection strength between the adapter 50 and the tab 12, and reduce the risk of tearing of the tab layers, improving the safety.

In some embodiments, the second bending segment 53 is provided in plurality, and the plurality of second bending segments 53 and the plurality of tab connecting portions 51 are in one-to-one correspondence.

In some embodiments, the tab connecting portion 51, the electrode connecting portion 52, and the third tab portion 123 are all parallel to the end face 111 of the body portion 11.

Being parallel means being substantially parallel, and being absolutely parallel is not required. For example, if an included angle between the tab connecting portion 51 and the end face 111 is less than 10°, the tab connecting portion 51 can be considered to be parallel to the end face 111; if an included angle between the electrode connecting portion 52 and the end face 111 is less than 10°, the electrode connecting portion 52 can be considered to be parallel to the end face 111; and if an included angle between the third tab portion 123 and the end face 111 is less than 10°, the third tab portion 123 can be considered to be parallel to the end face 111.

In these embodiments, the space occupied by the adapter 50 and the third tab portion 123 in the direction perpendicular to the end face 111 can be reduced, increasing the energy density of the battery cell 6.

In some embodiments, the second bending segment 53 is provided with a weak structure 531. The weak structure 531 is provided to guide the adapter 50 to be bent in a designated region.

In some embodiments, a structure such as a through hole 532, a groove, or an indentation may be provided on the adapter 50 to reduce strength of a local region of the adapter 50, thereby forming the weak structure 531 on the second bending segment 53.

In some embodiments, the adapter 50 is provided with a second fusion region 51a and a third fusion region 52a, the second fusion region 51a is disposed only on the tab connecting portion 51 and configured to be connected to the third tab portion 123, and the third fusion region 52a is disposed only on the electrode connecting portion 52 and configured to be connected to the electrode lead-out member 21.

For example, the tab connecting portion 51 is connected to the third tab portion 123 by welding, and after welding, the tab connecting portion 51 forms the second fusion region 51a. The electrode connecting portion 52 is connected to the electrode lead-out member 21 by welding, and after welding, the electrode connecting portion 52 forms the third fusion region 52a.

During bending of the adapter 50, the second fusion region 51a is disposed only on the tab connecting portion 51 and the third fusion region 52a is disposed only on the electrode connecting portion 52, such that the second fusion region 51a and the third fusion region 52a avoid the bending position of the adapter 50, reducing the risk of cracking of the second fusion region 51a and the third fusion region 52a.

According to some embodiments of this application, this application further provides a battery including a plurality of battery cells according to any one of the foregoing embodiments.

According to some embodiments of this application, this application further provides an electric apparatus including the battery cell according to any one of the foregoing embodiments, where the battery cell is configured to supply electric energy to the electric apparatus. The electric apparatus may be any one of the foregoing devices or systems using a battery cell.

According to some embodiments of this application, with reference to FIG. 3 to FIG. 8, this application provides a battery cell 6 including a housing 20, an electrode assembly 10, and an isolation member 30. The electrode assembly 10 is accommodated in the housing 20.

The housing 20 includes a housing body 23, an end cover 22, and an electrode lead-out member 21, where the housing body 23 has an opening, and the end cover 22 covers the opening to form an accommodating cavity for accommodating the electrode assembly 10. The electrode lead-out member 21 is disposed on the end cover 22.

The electrode assembly 10 includes a body portion 11 and a tab 12 led out of an end face 111 of the body portion 11.

The isolation member 30 includes an isolation plate 32 and a connecting plate 33, the connecting plate 33 surrounds an outer side of the isolation plate 32, and the connecting plate 33 protrudes out of a side of the isolation plate 32 facing away from the body portion 11 to define an accommodating recess 34 together with the isolation plate 32. The isolation plate 32 includes a first isolation plate 321 and a second isolation plate 322 that are spaced apart, a channel 31 being formed between the first isolation plate 321 and the second isolation plate 322.

The tab 12 includes a first tab portion 121, a second tab portion 122, and a third tab portion 123. The first tab portion 121 is connected to the body portion 11, one portion of the first tab portion 121 is located between the first isolation plate 321 and the end face 111, and the other portion of the first tab portion 121 is located between the second isolation plate 322 and the end face 111. The second tab portion 122 is connected to an end of the first tab portion 121 facing away from the body portion 11, the second tab portion 122 being accommodated in the channel 31. The third tab portion 123 includes a first segment 1231, a second segment 1232, and a first bending segment 1233. The first segment 1231 is connected to the second tab portion 122, at least a portion of the first isolation plate 321 being located between the first segment 1231 and the body portion 11. The second segment 1232 is located on a side of the first segment 1231 facing away from the body portion 11 and connected to the electrode lead-out member 21. The first bending segment 1233 is configured to connect the first segment 1231 and the second segment 1232. The first segment 1231 and the second segment 1232 are both substantially parallel to the end face 111.

The tab 12 includes a plurality of tab layers, a portion of the plurality of tab layers being stacked in the channel 31. Size of the channel 31 in its width direction is W₁, total thickness of the plurality of tab layers is T₁, and W₁ and T₁ satisfy 0.5 mm ≤ W₁ - T₁ ≤ 4 mm.

It should be noted that in absence of conflicts, the embodiments and features in the embodiments in this application may be combined with each other.

In conclusion, it should be noted that the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of this application.

## Claims

1. A battery cell, comprising:
a housing provided with an electrode lead-out member;
an electrode assembly accommodated in the housing, wherein the electrode assembly comprises a body portion and a tab led out of an end face of the body portion; and
an isolation member with at least a portion disposed between the electrode lead-out member and the end face of the body portion, wherein the isolation member is provided with a channel, and the tab passes through the channel and is electrically connected to the electrode lead-out member.

2. The battery cell according to claim 1, wherein the tab comprises a plurality of tab layers, a portion of the plurality of tab layers being stacked in the channel; wherein
size of the channel in its width direction is W₁, total thickness of the plurality of tab layers is T₁, and W₁ and T₁ satisfy 0.5 mm ≤ W₁ - T₁ ≤ 4 mm.

3. The battery cell according to claim 2, wherein W₁ and T₁ satisfy 1 mm ≤ W₁ - T₁ ≤ 3 mm.

4. The battery cell according to claim 2 or 3, wherein an axial direction of the channel is perpendicular to the end face of the body portion.

5. The battery cell according to any one of claims 1 to 4, wherein the tab comprises:
a first tab portion connected to the body portion, at least a portion of the first tab portion being located between the isolation member and the body portion;
a second tab portion connected to an end of the first tab portion facing away from the body portion, the second tab portion being accommodated in the channel; and
a third tab portion connected to an end of the second tab portion facing away from the first tab portion and configured to connect the electrode lead-out member, at least a portion of the isolation member being located between the third tab portion and the body portion.

6. The battery cell according to claim 5, wherein the third tab portion comprises:
a first segment connected to the second tab portion, at least a portion of the isolation member being located between the first segment and the body portion;
a second segment, the second segment being located on a side of the first segment facing away from the body portion and connected to the electrode lead-out member; and
a first bending segment configured to connect the first segment and the second segment.

7. The battery cell according to claim 6, wherein the second segment is parallel to the end face of the body portion.

8. The battery cell according to claim 6 or 7, wherein the third tab portion is provided with a first fusion region, the first fusion region is located only on the second segment, and at least a portion of the first fusion region is connected to the electrode lead-out member.

9. The battery cell according to claim 5, further comprising an adapter, wherein the adapter comprises:
a tab connecting portion connected to the third tab portion;
an electrode connecting portion located on a side of the tab connecting portion facing away from the body portion and connected to the electrode lead-out member; and
a second bending segment configured to connect the tab connecting portion and the electrode connecting portion.

10. The battery cell according to claim 9, wherein the tab connecting portion, the electrode connecting portion, and the third tab portion are all parallel to the end face of the body portion.

11. The battery cell according to claim 9 or 10, wherein the second bending segment is provided with a weak structure.

12. The battery cell according to any one of claims 9 to 11, wherein the adapter is provided with a second fusion region and a third fusion region, the second fusion region is disposed only on the tab connecting portion and configured to be connected to the third tab portion, and the third fusion region is disposed only on the electrode connecting portion and configured to be connected to the electrode lead-out member.

13. The battery cell according to any one of claims 5 to 12, wherein the isolation member comprises an isolation plate, the isolation plate is provided with the channel, and at least a portion of the isolation plate is located between the third tab portion and the body portion.

14. The battery cell according to claim 13, wherein the isolation member further comprises a connecting plate, the connecting plate surrounds an outer side of the isolation plate, and the connecting plate protrudes out of a side of the isolation plate facing away from the body portion to define an accommodating recess together with the isolation plate; wherein
at least a portion of the third tab portion is accommodated in the accommodating recess.

15. The battery cell according to claim 14, further comprising an insulating member accommodated in the housing and connected to the housing; wherein
at least a portion of the connecting plate is located between the insulating member and the end face of the body portion.

16. The battery cell according to claim 15, wherein in a first direction perpendicular to the end face, at least a portion of the connecting plate is clamped between the insulating member and the end face of the body portion.

17. The battery cell according to claim 15 or 16, wherein at least a portion of the insulating member is accommodated in the accommodating recess.

18. The battery cell according to claim 17, wherein an inner surface of the connecting plate is provided with a stepped surface, and the portion of the insulating member accommodated in the accommodating recess abuts against the stepped surface.

19. The battery cell according to claim 18, wherein the inner surface of the connecting plate further comprises a limiting surface connected to the stepped surface, and the limiting surface surrounds an outer side of the insulating member and is fitted to the insulating member.

20. The battery cell according to any one of claims 14 to 19, wherein the isolation member is an integrally formed structure.

21. The battery cell according to any one of claims 14 to 19, wherein
the isolation plate comprises a first isolation plate and a second isolation plate that are spaced apart, the channel being formed between the first isolation plate and the second isolation plate; and
the connecting plate comprises a first connecting plate and a second connecting plate, wherein the first connecting plate and the first isolation plate are integrally formed, the second connecting plate and the second isolation plate are integrally formed, and the first connecting plate and the second connecting plate are independently formed and connected to each other.

22. The battery cell according to claim 21, wherein the first connecting plate is snap-fitted with the second connecting plate.

23. The battery cell according to claim 22, wherein the first connecting plate comprises two first snap-fit portions, the two first snap-fit portions being disposed on two opposite ends of the first isolation plate respectively; and
the second connecting plate comprises two second snap-fit portions, the two second snap-fit portions being disposed on two opposite ends of the second isolation plate respectively;
wherein the first snap-fit portions are snap-fitted with the second snap-fit portions.

24. The battery cell according to claim 23, wherein at least one of the first snap-fit portions is provided with a protrusion and at least one of the second snap-fit portions is provided with a snap-fit hole, at least a portion of the protrusion being accommodated in the snap-fit hole to snap-fit the first snap-fit portion with the second snap-fit portion.

25. The battery cell according to any one of claims 13 to 24, wherein the isolation plate comprises a first isolation plate and a second isolation plate that are spaced apart, the channel being formed between the first isolation plate and the second isolation plate; and
one portion of the first tab portion is located between the first isolation plate and the body portion, and the other portion of the first tab portion is located between the second isolation plate and the body portion.

26. The battery cell according to claim 25, wherein
the first isolation plate comprises a first inclined surface facing the body portion; and in a first direction perpendicular to the end face, minimum distance between an end of the first inclined surface closer to the channel and the end face of the body portion is greater than minimum distance between an end of the first inclined surface farther away from the channel and the end face of the body portion; and
in the first direction, one portion of the first tab portion is located between the first inclined surface and the end face of the body portion.

27. The battery cell according to claim 26, wherein
an included angle between the first inclined surface and the end face is α, size of the first tab portion in the first direction is h₀, and size of the first tab portion in a second direction is W₀, the second direction being a stacking direction of a plurality of tab layers of the first tab portion and perpendicular to the first direction; wherein
α, h₀, and W₀ satisfy tanα ≥ 2h₀/W₀.

28. The battery cell according to claim 27, wherein α, h₀, and W₀ satisfy tanα = 2h₀/W₀.

29. The battery cell according to any one of claims 26 to 28, wherein the first inclined surface abuts against the first tab portion.

30. The battery cell according to any one of claims 26 to 29, wherein the second isolation plate comprises a second inclined surface facing the body portion;
in the first direction, minimum distance between an end of the second inclined surface closer to the channel and the end face of the body portion is greater than minimum distance between an end of the second inclined surface farther away from the channel and the end face of the body portion; and
in the first direction, the other portion of the first tab portion is located between the second inclined surface and the end face of the body portion.

31. The battery cell according to claim 30, wherein an included angle between the first inclined surface and the end face is equal to an included angle between the second inclined surface and the end face.

32. The battery cell according to any one of claims 25 to 31, wherein
minimum thickness of the first isolation plate is d1, wherein d1 ≥ 0.5 mm; and/or
minimum thickness of the second isolation plate is d2, wherein d2 ≥ 0.5 mm.

33. The battery cell according to any one of claims 25 to 32, wherein
minimum thickness of an end portion of the first isolation plate farther away from the channel is greater than minimum thickness of an end portion of the first isolation plate closer to the channel.

34. The battery cell according to any one of claims 25 to 33, wherein the third tab portion comprises:
a first segment connected to the second tab portion;
a second segment located on a side of the first segment facing away from the body portion and connected to the electrode lead-out member; and
a first bending segment configured to connect the first segment and the second segment, at least a portion of the first isolation plate being located between the first bending segment and the body portion.

35. The battery cell according to claim 34, wherein the first isolation plate is provided with a third inclined surface on a side facing away from the end face of the body portion;
in a first direction perpendicular to the end face, minimum distance between an end of the third inclined surface closer to the channel and the electrode lead-out member is less than minimum distance between an end of the third inclined surface farther away from the channel and the electrode lead-out member; and
in the first direction, at least a portion of the first segment and at least a portion of the second segment are located between the third inclined surface and the electrode lead-out member.

36. The battery cell according to claim 35, wherein the tab comprises a plurality of tab layers, and total thickness of the plurality of tab layers is T₁; and
in the first direction, the minimum distance between the end of the third inclined surface closer to the channel and the electrode lead-out member is H₁, wherein H₁ > 2T₁.

37. The battery cell according to claim 36, wherein in the first direction, the minimum distance between the end of the third inclined surface farther away from the channel and the electrode lead-out member is H₂, wherein H₂ > 3T₁.

38. The battery cell according to claim 36 or 37, wherein the first isolation plate is provided with a first level surface on the side facing away from the end face of the body portion, the first level surface being perpendicular to the first direction and connected to the end of the third inclined surface farther away from the channel;
in the first direction, at least a portion of the first level surface is located between the first bending segment and the body portion; and
in the first direction, minimum distance between the first level surface and the electrode lead-out member is greater than 3T₁.

39. The battery cell according to claim 38, wherein the first isolation plate comprises a first inclined surface facing the body portion;
in the first direction, minimum distance between an end of the first inclined surface closer to the channel and the end face of the body portion is greater than minimum distance between an end of the first inclined surface farther away from the channel and the end face of the body portion; and in the first direction, one portion of the first tab portion is located between the first inclined surface and the end face of the body portion; and
in the first direction, minimum thickness of a portion of the first isolation plate located between the first inclined surface and the first level surface is greater than minimum thickness of a portion of the first isolation plate located between the first inclined surface and the third inclined surface.

40. The battery cell according to any one of claims 1 to 39, wherein the tab comprises a plurality of tab layers that are stacked, the plurality of tab layers are gathered toward a middle region of the end face of the body portion, and the channel is located in a middle region of the isolation member.

41. The battery cell according to any one of claims 1 to 39, wherein the tab comprises a plurality of tab layers that are stacked, the plurality of tab layers are gathered toward a side region of the end face of the body portion, and the channel is located in a side region of the isolation member.

42. A battery, comprising a plurality of battery cells according to any one of claims 1 to 41.

43. An electric apparatus, comprising the battery cell according to any one of claims 1 to 41, wherein the battery cell is configured to supply electric energy.
